**Europäisches Patentamt**

**European Patent Office**

**Office européen des brevets**

(11) Veröffentlichungsnummer: **0 263 855**
**B1**

(12) **EUROPÄISCHE PATENTSCHRIFT**

(45) Veröffentlichungstag der Patentschrift: **22.08.90**

(21) Anmeldenummer: **87902373.7**

(22) Anmeldetag: **02.04.87**

(86) Internationale Anmeldenummer:
**PCT/DE87/00145**

(87) Internationale Veröffentlichungsnummer:
**WO 87/06347 22.10.87 Gazette 87/23**

(51) Int. Cl.⁵: **G 01 P 1/00**

(54) **BESCHLEUNIGUNGSSENSOR.**

(30) Priorität: **11.04.86 DE 3612187**
**11.02.87 DE 3704209**

(43) Veröffentlichungstag der Anmeldung:
**20.04.88 Patentblatt 88/16**

(45) Bekanntmachung des Hinweises auf die
Patenterteilung:
**22.08.90 Patentblatt 90/34**

(84) Benannte Vertragsstaaten:
**AT DE FR GB**

(56) Entgegenhaltungen:
**DE-A-3 021 317**
**DE-B-1 301 592**
**FR-A- 492 818**
**US-A-2 987 669**

(73) Patentinhaber: **ROBERT BOSCH GMBH**
**Postfach 50**
**D-7000 Stuttgart 1 (DE)**

(72) Erfinder: **HUBER, Werner**
**Bahnhofstr. 64**
**D-7052 Schwaikheim (DE)**

Courier Press, Leamington Spa, England.

## Beschreibung

### Stand der Technik

Die Erfindung geht aus von einem Beschleunigungssensor nach der Gattung des unabhängigen Anspruchs. Bei einem derartigen, aus der DE—A 30 21 317 bekanntgewordenen Beschleunigungssensor ist keine Dämpfung für das Feder-Masse-System vorgesehen, was zu Überschwingungen und unerwünschten Resonanzschwingungen führen kann, wodurch die Meßgenauigkeit des Sensors beeinträchtigt wird.

Aus der DE—B 1 301 592 ist weiterhin ein beschleunigungs- bzw. verzögerungsempfindlicher Signalgeber bekanntgeworden, bei welchem eine auf einer Bahn mit einstellbarer Neigung in bzw. entgegen der Fahrtrichtung bewegliche Masse bei Überschreiten eines vorbestimmten Beschleunigungswerts durch ihre Lageänderung ein Signal auslöst. Die Bewegungsbahn der Masse besteht aus einem in einer senkrecht zur Fahrbahn stehenden Ebene und parallel zur Fahrtrichtung schwingfähigen Pendel, wobei die Masse des Pendels derart verteilt ist, daß das Trägheitsmoment des oberhalb der Achse befindlichen Pendelteils etwas kleiner als das des Pendelteils unterhalb der Drehachse ist und wobei eine Dämpfungsvorrichtung für die Masse und/oder das Pendel angeordnet ist. Ein derartiger Beschleunigungssensor ist etwas kompliziert aufgebaut und nicht sehr zweckmäßig gestaltet, wodurch er teuer wird und in der Anwendung nicht gerade sehr günstig ist. Es ist jedoch bekannt, ein überschwingen der Pendels mittels einer Wirbelstrom dämpfung zu verhüten.

### Vorteile der Erfindung

Der erfindungsgemäße Beschleunigungssensor mit den kennzeichnenden Merkmalen des unabhängigen Anspruchs hat gegenüber flüssigkeitsgedämpften Beschleunigungssensoren den Vorteil, daß die Dämpfung bzw. der Frequenzgang eine nur geringe Temperaturabhängigkeit aufweisen und sehr einfach, billig und auch leicht gestaltet ist.

Besonders zweckmäßige Ausgestaltungen der Erfindung ergeben sich aus den abhängigen Ansprüchen. Durch die Verwendung einer Blattfeder bzw. eines Federbands oder einer Torsionsfeder und beispielsweise einem Hall-Element als Sensor wird das Gerät besonders kompakt und leicht. Der Sensor kann insbesondere auch als Winkelbeschleunigungssensor ausgebildet sein.

### Zeichnung

Zwei Ausführungsbeispiele der Erfindung sind in der nachfolgenden Zeichnung dargestellt und in der Beschreibung näher erläutert. Die Zeichnung zeigt in Figur 1 eine Seitenansicht eines ersten Beschleunigungssensors, in Figur 2 eine Draufsicht, in Figur 3 eine Ansicht in Pfeilrichtung, in Figur 4 ein Diagramm, in Figur 5 einen Winkelbeschleunigungssensor in Seitenansicht, in Figur 6 eine Ansicht von hinten und Figur 7 eine Draufsicht auf ein Einzelteil des Sensors.

### Beschreibung der Ausführungsbeispiele

In der Zeichnung ist mit 10 die Grundplatte eines Beschleunigungssensors bezeichnet, von welcher sich im rechten Winkel ein Steg 11 nach oben erstreckt. Am Steg 11 ist eine Blattfeder 12 befestigt, insbesondere durch Punktschweißen, die etwa rechteckförmig ausgebildet ist und sich hochkant parallel zur Grundplatte 10 erstreckt. Am freien Ende der Blattfeder 12 ist eine Wirbelstromscheibe 13 befestigt, insbesondere ebenfalls wieder durch Punktschweißen, die etwa rechteckförmig ausgebildet ist und sich waagrechtliegend quer zur Blattfeder 12 erstreckt. Die Wirbelstromscheibe taucht in ein käfigförmiges Flußleitstück 15 ein, das vorzugsweise aus weichmagnetischem Werkstoff besteht. In dem Flußleitstück 15 sind im Abstand zueinander zwei quaderförmige Bremsmagnete 16, 17 angeordnet, die sich zur Bremsscheibe 13 hin erstrecken, diese aber nicht berühren. Die Breite des Flußleitstücks 15 ist einiges größer als die Breite der Wirbelstromscheibe 13, so daß diese ohne Schwierigkeit im Flußleitstück hin- und herschwingen kann.

Am freien Ende der Blattfeder 12, also dort, wo die Wirbelstromscheibe 13 beginnt, erstreckt sich ein Fortsatz 18 zur Grundplatte 10 hin. Am unteren Ende des Fortsatzes 18 ist ein Sensormagnet 19 angeordnet, welcher mit einem gegenüberliegenden Hall-Element 20 zusammenwirkt, das an der Grundplatte 10 befestigt ist. Anschließend an das Hall-Element sind auf der Grundplatte Auswerteschaltungen 21 in Dick- oder Dünnschichttechnik aufgetragen.

Die Wirbelstromscheibe 13 bildet zusammen mit dem Flußleitstück 15 und den Bbremsmagneten 16, 17 eine Wirbelstrombremse. Die Brems-magnete sind gegensinnig magnetisiert. Aufgrund dieser gegensinnigen Magnetisierung ist das Magnetfeld im Luftspalt zwischen Wirbelstromscheibe 13 und den Bremsmagneten 16, 17 sehr inhomogen, wodurch die Wirbelstromerzeugung beim Hin- und Herschwingen der Wirbelstromscheibe gefördert wird.

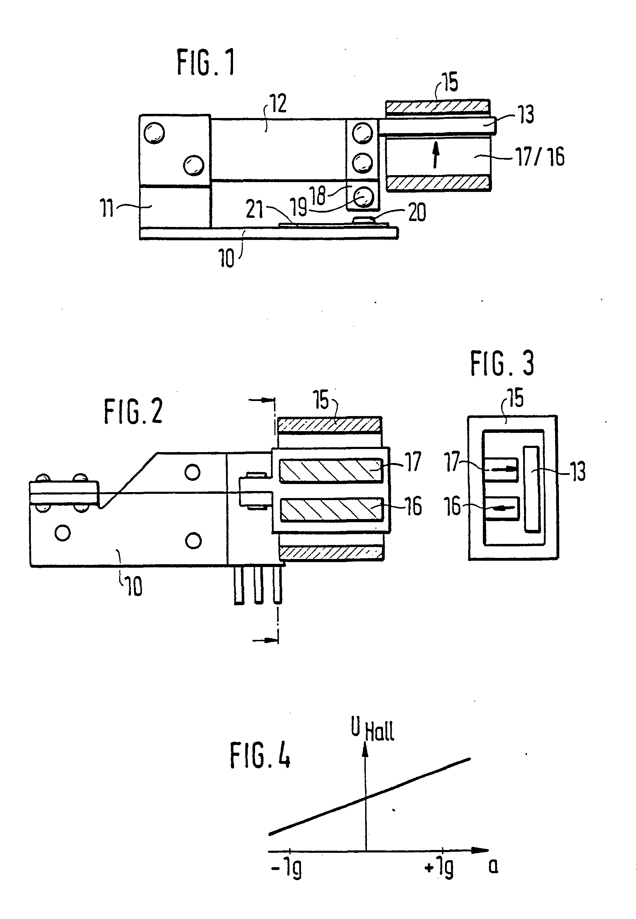

Der Beschleunigungssensor ist beispielsweise senkrecht zur Fahrtrichtung eines Fahrzeugs angeordnet. Die träge Masse in Form der Wirbelstromscheibe 13 am Ende der Blattfeder 12 wird proportional zur senkrecht zur Blattfeder einwirkenden Beschleunigung ausgelenkt. Die Auslenkung ist durch die Federkonstante der Blattfeder und die träge Masse bestimmt. Die Wirbelstromdämpfung kommt durch die Bewegung der träger Massen — insbesondere der Wirbelstromscheibe 13 — im Luftspalt des Magnetkreises zustande. Durch die bei der Schwingung induzierten Wirbelströme wird die Schwingungsenergie abgebaut. Durch geeignete Auslegung des Systems Blattfeder — Magnetkreis kann jede gewünschte Dämpfung erzielt werden. Der Hub der trägen Masse wird durch den Sensormagnet 19 und das Hall-Element 20 gemessen und in eine proportionale Ausgangsspannung verwandelt, siehe hierzu das Diagramm nach Figur 4.

Zweckmäßigerweise besteht die Wirbelstromscheibe 13 aus Reinaluminium oder Kupfer, die Blattfeder aus Tombak.

Der Magnetkreis dient neben der Schwingungsdämpfung gleichzeitig als mechanischer Anschlag, so daß beim Auftreten von Beschleunigungsspitzen eine Beschädigung der Blattfeder verhindert wird. Durch den Beschleunigungssensor können beispielsweise Insassenschutzvorrichtungen in einem Kraftfahr-zeug betätigt werden, beispielsweise Gurtstram-mer, oder es kann beispielsweise die beim Abbremsen des Fahrzeugs auftretende Verzögerung gemessen und mit diesem Signal die Wirkung eines Antiblockiersystems verbessert werden.

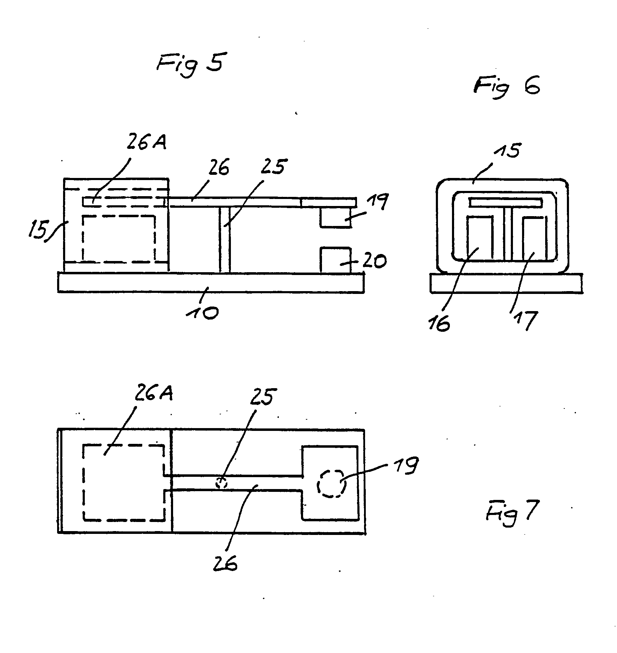

Beim Winkelbeschleunigungssensor nach den Figuren 5, 6 und 7 ist auf der Grundplatte 10 ein Torsionsstab 25 senkrecht befestigt, an dessen Spitze ein parallel zur Grundplatte 10 verlaufender Doppelarm 26 befestigt ist. An einem desselben ist wiederum der Sensormagnet 19 befestigt, das entgegengesetzte Ende bildet die Wirbelstrombremsscheibe 26A, die in das Flußleitstück 15 eintaucht. Dieses ist auf der Grundplatte 10 befestigt und nimmt die beiden Bremsmagnete 16, 17 auf. Die Funktionsweise ergibt sich auf-grund des zuerst beschriebenen Ausführungs-beispiels von selbst, lediglich mit dem Unterschied, daß nun durch Verdrehen des Torsionsstabs eine Drehwinkelbeschleunigung erfaßt, gemessen und gedämpft wird. Anstelle eines Torsionsstabs kann auch ein Torsionsdraht oder eine andere reibungsarme Lagerung verwendet werden.

Vorteilhaft ist es, wenn die Magnetisierung des Sensormagnets in Bewegungsrichtung zeigt, wodurch sich ein linearer Zusammenhang zwischen der zu messenden Beschleunigung und der Ausgangsspannung des Hall-Elementes ergibt.

## Patentansprüche

1. Beschleunigungssensor mit einem Feder-Masse-System, der über ein Wegmeßsystem (19, 20, 21) zur Ermittlung der Beschleunigung verfügt, das ein Hall-Element (20) und einen mit diesem zusammenwirkenden Sensormagnet (19) aufweist, dadurch gekennzeichnet, daß das Feder-Masse-System mit einer Wirbelstromdämpfung für die durch die Beschleunigung bewegte Masse versehen ist und daß die Wirbelstromdämpfung aus zwei entgegengesetzt polarisierten Magneten (16, 17), einem Flußleitgehäuse (15) aus weichmagnetischem Werkstoff, in welchem die Magneten befestigt sind, und einer den wesentlichen Teil der Masse bildenden Wirbelstromscheibe (13) besteht, die über einen Luftspalt von den Magneten (16, 17) getrennt ist und durch das von den entgegengesetzt polarisierten Magneten im Luftspalt erzeugt inhomogene Magnetfeld beim Schwingen gedämpft wird.

2. Sensor nach Anspruch 1, dadurch gekennzeichnet, daß das Feder-Masse-System eine einseitig eingespannte, an ihrem freien Ende die Wirbelstromscheibe (13) tragende Blattfeder (12) aufweist.

3. Sensor nach Anspruch 1, dadurch gekennzeichnet, daß die Feder (25) ein Torsionselement ist, an dem ein Doppelarm (26) befestigt ist, an dessen einem Ende der Sensormagnet (19) angeordnet ist, an seinem anderen Ende die Wirbelstromdämpfung (13—17).

## Revendications

1. Accéléromètre avec un système ressort-masse, qui dispose d'un système de mesure de déplacement (19, 20, 21) pour déterminer l'accélération, ce système comportant un élément de Hall (20) et un aimant détecteur (19) coopérant avec cet élément, accéléromètre caractérisé en ce que le système ressort-masse est mni d'un amortissement par courants de Foucault pour la masse déplacée par l'accélération, et que cet amortissement par courants de Foucault est constitué par deux aimants (16, 17) polarisés en sens inverse, par un boîtier conducteur du flux magnétique (15) en un matériau magnétique mou et dans lequel sont fixés les aimants, et par une plaque pour courants de Foucault (13), constituant la partie essentielle de la masse, et qui est séparée des aimants (16, 17) par l'intermédiaire d'un entrefer, et dont les oscillations sont amorties par le champ magnétique non homogène produit dans l'entrefer par les aimants polarisés en sens inverse.

2. Accéléromètre selon la revendication 1, caractérisé en ce que le système ressort-masse comporte un ressort à lame (12) bridé à une extrémité, et portant à son extrémité libre la plaque (13) pour courants de Foucault.

3. Accéléromètre selon la revendication 1, caractérisé en ce que le ressort (25) est un élément de torsion auquel est fixé un double bras (26) à une extrémité duquel est disposé l'aimant détecteur (19) tandis qu'à l'autre extrémité, est disposé l'amortissement par courants de Foucault (13 à 17).

## Claims

1. Accelerometer with a spring-mass system, said accelerometer having a position sensor system (19, 20, 21) for calculating the acceleration, said position sensor system having a Hall element (20) and a sensor magnet (19) which itneracts with the latter, characterized in that the spring-mass system is provided with an eddy current damper for the mass moved by the acceleration and in that the eddy current damper consists of two oppositely polarized magnets (16, 17), a flux concentrating housing (15) of material with low retentivity, in which the magnets are secured, and an eddy current disc (13) forming the essential part of the mass, said eddy current disc being separated from the magnets (16, 17) via an air gap and being damped, during swinging, by the inhomogeneous magnet field generated in the air gap by the oppositely polarized magnets.

2. Sensor according to Claim 1, characterized in that the spring-mass system has a leaf spring (12) which is clamped on one side and at its fee end bears the eddy current disc (13).

3. Sensor according to Claim 1, characterized in that the spring (25) is a torsion element, to which a double arm (26) is secured, at one end of which is arranged the sensor magnet (19), and at the other end of which the eddy current damper (13—17).

# FIG. 1

# FIG. 2

# FIG. 3

# FIG. 4

$U_{Hall}$

$-1g$    $+1g$    $a$

Fig 5

Fig 6

26A

26    25

19

15

20

10

15

16    17

26A    25

19

26

Fig 7